(19) Europäisches Patentamt
European Patent Office
Office européen des brevets

(11) **EP 2 062 443 B1**

(12) **EUROPÄISCHE PATENTSCHRIFT**

(45) Veröffentlichungstag und Bekanntmachung des Hinweises auf die Patenterteilung:
**27.08.2014 Patentblatt 2014/35**

(21) Anmeldenummer: **07786286.0**

(22) Anmeldetag: **24.07.2007**

(51) Int Cl.:
**H04N 9/31** (2006.01)     **G02B 7/00** (2006.01)

(86) Internationale Anmeldenummer:
**PCT/EP2007/006559**

(87) Internationale Veröffentlichungsnummer:
**WO 2008/022686 (28.02.2008 Gazette 2008/09)**

(54) **FARBRAD**

COLOURED WHEEL

DISQUE COLORE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **24.08.2006 DE 102006039451**

(43) Veröffentlichungstag der Anmeldung:
**27.05.2009 Patentblatt 2009/22**

(73) Patentinhaber: **Oerlikon Trading AG, Trübbach 9477 Trübbach (CH)**

(72) Erfinder:
• **CUSICK, Mike**
  **Greenwood Village, CO 80111 (US)**
• **MILBOURNE, Mike**
  **Los Altos, CA 94022 (US)**
• **MANN, Allen**
  **Conifer, CO 80433 (US)**

(74) Vertreter: **Kempkens, Anke et al**
  **Hofgraben 486**
  **86899 Landsberg (DE)**

(56) Entgegenhaltungen:
**EP-A- 0 615 146        US-A- 4 076 393**
**US-A- 5 084 123        US-A- 5 868 482**
**US-A1- 2005 168 857    US-A1- 2006 126 199**
**US-B1- 6 604 830       US-B1- 6 705 733**

**Beschreibung**

Die vorliegende Erfindung bezieht sich auf Farbrad zur Verwendung in Projektoren, um farbsequentielle Beleuchtung zu generieren.

Farbräder der oben genannten Art werden in Anwendungen verwendet, bei denen periodische Farbwechsel in raschem Wechsel benötigt werden. Beispiele für optische Systeme, die solche Bauteile verwenden, sind Apparaturen zur Bilderzeugung oder Display-Aufbauten. Rück- oder Frontprojektoren für Fernsehapparate sind typische Anwendungen.

Um einen schnellen Farbwechsel zu erzeugen, werden Farbfilter in rascher Abfolge in den optischen Beleuchtungsweg eingebracht. Zu diesem Zweck wird ein Bauteil mit Träger verwendet, an dem Filtersegmente angeordnet sind, die zusammen einen kreisförmigen Umfang bilden. Dieses Bauteil bildet einen Farbrotor, wobei Teile der Segmente über den Träger hinausragen. Die über den Träger hinausragenden Teile der Segmente bilden einen Farbring, der dafür vorgesehen ist, in den optischen Weg eingesetzt zu werden. In der Anwendung wird der Farbrotor um seine zentrale Achse rotiert. Durch schnelle Rotation des Farbrotors werden die Filtersegmente abwechselnd in den optischen Weg hineingeführt und wieder hinausgeführt, wodurch der gewünschte schnelle Farbwechsel erzeugt wird. Um den Rotor in Rotation zu versetzen, wird er an der Antriebsachse eines Motors angeordnet. Der Farbrotor zusammen mit dem Motor bildet ein Farbrad.

Da die Apparatur zu Bilderzeugung in der Lage sein muss, Bilder von hoher Qualität zu erzeugen, müssen die Farbwechsel sehr rasch ausgeführt werden. Dies bedeutet, dass die Filtersegmente mit sehr hoher Geschwindigkeit durch den optischen Weg eines Lichtstrahls geführt werden müssen. Eine schnelle Rotation des Farbrotors ist daher zwingend. Im Ergebnis treten Beschleunigungen auf, die die Erdbeschleunigung g einige hundert Male übertreffen. Entsprechend hohe Kräfte wirken auf den Rotor und insbesondere auf die Filtersegmente. Bei einer sehr guten Bildqualität können die auftretenden Beschleunigungen durchaus 1000g übertreffen. Zusätzlich bedarf es einer sehr guten Auswuchtung des Farbrotors, um eine lange Lebensdauer des Farbrades zu gewährleisten. Eine Apparatur zur Bilderzeugung muss auch sehr hohe Anforderungen in Bezug auf Lichtstärke erfüllen. Dies ist nur mit leistungsstarken Lichtquellen zu erreichen ist. Aufgrund dieser leistungsstarken Lichtquellen wird die Apparatur entsprechend hohen Temperaturen von bis zu 100°C ausgesetzt.

Auf der anderen Seite müssen Farbräder oft zumindest zeitweise Temperaturen von -20°C oder sogar darunter standhalten. Die Projektoren - und mit ihnen die Farbräder - sind solch niedrigen Temperaturen möglicherweise beim Transport ausgesetzt. Solch niedrige Temperaturen können auch vorkommen, wenn die Produkte vor dem Verkauf gelagert werden.

Aus diesem Grund muss die Stärke der Befestigung der Filtersegmente am Träger, sowie die Farbstabilität der Filtersegmente sehr anspruchsvolle Anforderungen erfüllen. Eine große Anwendungs - Bandbreite in so genannten Niedrigpreis - Display Anwendungen wäre nur realistisch, wenn es möglich wird, ein Farbrad zu sehr niedrigem Preis mit hoher Qualität herzustellen.

Ein Farbrotor mit, in Bezug auf den Umfang kreisförmig angeordneten Filtersegmenten, zur Anwendung in einer Bilderzeugungs-Apparatur wird in EP 0 615 146 A2 beschrieben. In diesem Bauteil sind die Filtersegmente auf einem Glasring montiert. Wird das dort beschriebene Element in den optischen Weg eingebracht, so muss das Licht durch einen Bereich propagieren, in dem Klebstoff vorhanden ist. Die meisten Klebstoffe halten einer typischerweise dort auftretenden Lichtintensität nicht stand. Der Glasring führt ausserdem zu zusätzlichem Lichtverlust, wodurch die Wirtschaftlichkeit der gesamten Apparatur gemindert wird.

Ein weiteres Farbrad wird in US 2006/0126199 offenbart.

In US 5,868,482 sind flache Filtersegmente an einem Träger derart angeordnet, dass in Rotationsrichtung der Bereich zwischen den Filtersegmenten nicht durch optisch intransparente Materialien durchbrochen ist. Die Filtersegmente sind in Form einer Oberflächenverklebung in einer streifenförmigen Zone, die in Richtung Rotationsachse weisst, am Träger befestigt. Oberflächenverklebung ist lediglich in einem schmalen Ringbereich in Richtung Rotationszentrum vorhanden, so dass ein wesentlicher Bestandteil der Oberfläche der Filtersegmente, gesehen von der Rotationsachse nach aussen, als brauchbare transparente ringförmige Zone frei bleibt. Zusätzliche Elemente zur Befestigung können dabei vollständig vermieden werden.

US 6,705,733 basiert auf dem gleichen Konzept, beschreibt aber eine zusätzliche Scheibe auf den Filtersegmenten. Die Mantelfläche dieser Scheibe umfasst eine Rille, die zur Auswuchtung des Farbrades verwendet werden kann. Temperaturunterschiede werden überhaupt nicht diskutiert, und Probleme bezüglich Temperaturschwankungen sind nicht gelöst. Es werden auch keine Materialeigenschaften diskutiert.

Will man die Filtersegmente an den Träger gemäß US 5,868,482 kleben, so ist die Wahl des Klebstoffs von speziellem Interesse, da diese Wahl abhängig von der Betriebs-Drehzahl des Farbrades geschehen sollte.

Bei Betriebs-Drehzahlen zwischen 4000 Umin (Umin = Umdrehungen pro Minute) und kleiner 10.000 Umin spricht man von kleinen Drehzahlen. Typischerweise wird in diesem Bereich für das Farbrad eine Drehzahl von 7.200 Umin angesetzt. Demgegenüber spricht man von grossen Drehzahlen im Bereich von 10.000 Umin bis 25.000 Umin.

Ein typischerweise verwirklichte Betriebs-Drehzahl beträgt 14.400 Umin.

Verwendet man einen weichen Klebstoff, dann neigen die Filtersegmente dazu, sich im Falle hoher Betriebs-Drehzahlen zu lösen. Harte Klebstoffe halten besser. Spannungsanalysen, insbesondere Simulationen der Lagerung bei kalter Temperatur, haben jedoch gezeigt, dass harte Klebstoffe verstärkt zu defekten Farbrädern führen. Dies als Folge von Glasbruch.

Es besteht daher das Bedürfnis nach einem Farbrad, basierend auf typischen Materialien, das einerseits geeignet ist für hohe Betriebs-Drehzahlen und andererseits Temperaturschwankungen zwischen -20°C und +80°C im wesentlichen folgenlos standhalten kann.

Es ist daher die Aufgabe der vorliegenden Erfindung, das Bedürfnis nach einem solches Farbrad und nach einer Methode zur Herstellung eines solchen Farbrades zu befriedigen.

Eine Hypothese, warum es zu Glasbruch kommt, bezieht sich auf die unterschiedlichen thermischen Expansionskoeffizienten (CTE = coefficient of thermal expansion) der Materialien der Segmentsubstrate (beispielsweise Glas) und des Trägers (beispielsweise Aluminium).

Die der Erfindung zugrunde liegende Aufgabe kann dadurch gelöst werden, dass das Farbrad aus US 5,868,482 in der Weise modifiziert wird, dass die Segmente nicht direkt auf den drehbar gelagert Träger geklebt werden. Entsprechend der vorliegenden Erfindung wird eine zusätzliche Scheibe zwischen den Segmente und dem drehbar gelagerten Träger eingeführt, wobei die zusätzliche Scheibe einen CTE hat, die dem CTE der Segmente nahe kommt und vorzugsweise gleich ist.

Weitere Merkmale der Erfindung sind in Anspruch 1 definiert.

Ein erfindungsgemässes Farbrad ist daher ein Farbrad mit einem Motor und einem Rotor, wobei der Rotor einen Träger aus einem Material mit einem ersten thermischen Expansionskoeffizienten CTE 1 umfasst und der Rotor transparente Segmente mit einem zweiten, vom ersten unterschiedlichen Expansionskoeffizienten CTE 2 umfasst, und die Segmente vermittels einer die Segmente fest verbindenden Scheibe so am Träger befestigt sind, dass Teile der Segmente über die Scheibe und den Träger hinausragen, und die hinausragenden Teile der Segmente zusammen einen ringförmigen transparenter Bereich bilden, wobei der thermischen Expansionskoeffizienten CTE 3 des Scheibenmaterials entweder im wesentlichen gleich dem CTE2 ist oder gilt:

$$\left| CTE\,3 - \frac{CTE\,1 + CTE\,2}{2} \right| < \left| \frac{CTE\,1 - CTE\,2}{2} \right| .$$

Das Scheibenmaterial kann gemäß einer Ausführungsform im Wesentlichen gleich dem Segmentmaterial sein.

Als Scheibenmaterial kommt auch beispielsweise ein Metall in Frage. Vorzugsweise ist dies Stahl und besonders bevorzugt wird rostfreier Stahl verwendet.

Der Träger kann im Wesentlichen ein Aluminiumträger sein und das Segmentmaterial kann im wesentlichen Glas und/oder Plastik sein.

Zur Befestigung der Segmente an der Scheibe wird ein erster Klebstoff verwendet und zur Befestigung der Scheibe am Träger wird ein zweiter Klebstoff verwendet, wobei die durch den ersten Klebstoff entstandene Verbindung deutlich stärker ist als die durch den zweiten Klebstoff entstandene Verbindung.

Ein anderes erfindungsgemässes Farbrad ist ein Farbrad mit einem Motor und einem Rotor, wobei der Rotor einen Träger aus einem Material mit einem ersten thermischen Expansionskoeffizienten CTE 1 umfasst und der Rotor transparente Segmente mit einem zweiten, vom ersten unterschiedlichen Expansionskoeffizienten CTE 2 umfasst, und die Segmente vermittels einer Trägerbeschichtung so am Träger befestigt sind, dass Teile der Segmente über den Träger hinausragen und die hinausragenden Teile der Segmente zusammen einen ringförmiger transparenter Bereich bilden, wobei für den thermischen Expansionskoeffizienten der Trägerbeschichtung gilt:

$$\text{entweder } CTE\,3 = CTE\,2 \text{ oder } \left| CTE\,3 - \frac{CTE\,1 + CTE\,2}{2} \right| < \left| \frac{CTE\,1 - CTE\,2}{2} \right| .$$

Das Beschichtungsmaterial kann beispielsweise im wesentlichen Titan sein.

Als Trägermaterial kommt beispielsweise im Wesentlichen Aluminium und als Segmentmaterial beispielsweise im Wesentlichen Glas und/oder Plastik in Frage

Zur Herstellung eines erfindungsgemäßen Farbrades wird beispielsweise nach folgenden Schritten verfahren:

- Auswahl eines Trägermaterials mit einem ersten thermischen Expansionskoeffizienten CTE 1
- Bereitstellen einer Anzahl von Segmenten, vorzugsweise aus Glas oder Plastik mit einem zweiten thermischen Expansionskoeffizienten CTE 1 ungleich CTE 2
- Bereitstellen einer Scheibe mit einem thermischen Expansionskoeffizienten CTE3 wobei gilt: entweder CTE 3 = CTE 2 oder

$$\left| CTE\,3 - \frac{CTE\,1 + CTE\,2}{2} \right| < \left| \frac{CTE\,1 - CTE\,2}{2} \right|$$

- Befestigen der Segmente an der Scheibe, vorzugsweise mittels Verkleben, derart, dass Teile der Segmente über die Scheibe hinausragen und die hinausragenden Teile der Segmente einen ringförmigen Bereich bilden
- Bereitstellen eines Motors mit einem drehbar gelagertem Träger aus dem ausgewählten Trägermaterial, wobei der Umfang des Trägers kleiner als der durch die hinausragenden Teile der Segmente gebildete ringförmige Bereich ist
- im wesentlichen zentriertes Befestigen des Trägers an der den Segmenten gegenüberliegenden Seite der Scheibe.

Anschliessend kann das Farbrad ausgewuchtet werden.

Im Folgenden wird die Erfindung beispielhaft und anhand der Bilder genauer erläutert.

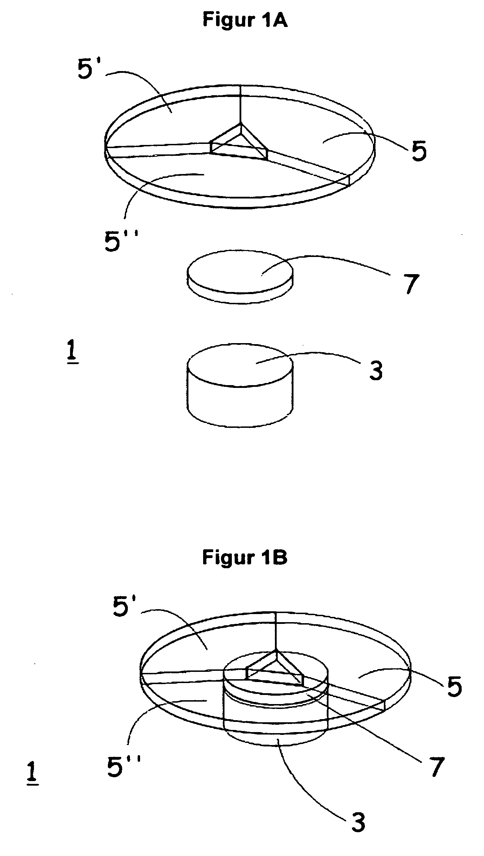

Figur 1A zeigt die Explosionsansicht einer ersten Ausführungsform der vorliegenden Erfindung. Figur 1B zeigt die Ausführungsform gemäß Figur 1A in assemblierter Form. Gezeigt ist ein Farbrotor 1 mit einem drehbar gelagertem Träger 3, Farbfiltersegmente 5, 5', 5" und einer Scheibe 7.

Der drehbar gelagerte Träger 3 sollte einfach zu fertigen sein und ein geringes Gewicht aufweisen. Aus diesem Grund wird er typischerweise aus Aluminium hergestellt. Aluminium hat bei 20°C einen CTE von ungefähr $23{\cdot}10^{-6}$/K. Im Folgenden wird der CTE abgekürzt zitiert, mit "CTE von 23" ist gemeint "$23\cdot10^{-6}$ /K bei 20° C"

Die Farbfiltersegmente 5, 5', 5" werden dadurch hergestellt, dass transparente Glasplatten mit einer Dünnfilm-Interferenzbeschichtung beschichtet werden. Auf diese Art wird ein Teil des sichtbaren Spektrums transmittiert und ein Teil reflektiert. Nachdem die Glasplatten beschichtet sind, werden sie auf die benötigte Segmentform zugeschnitten. Glas kann einfach und schnell mittels Ritzen und Brechen zugeschnitten werden. Dies ist einer der Gründe, warum typischerweise Glas verwendet wird, um die Filtersegmente herzustellen. Der CTE von Glas liegt bei 20°C typischerweise zwischen 0.5 und 10. Im hier diskutierten Beispiel wird BK7-Glas verwendet. BK7 hat einen CTE von 7.1.

Der drehbar gelagerte Aluminiumträger 3 und die Farbfiltersegmente 5, 5', 5" aus Glas haben daher sehr unterschiedliche thermische Expansionskoeffizienten (CTE). Werden die Farbfiltersegmente 5, 5', 5" aus Glas nun direkt auf den drehbar gelagerte Aluminiumträger 3 mittels Klebstoff geklebt, dann muss der Klebstoff weich genug sein, um diesen Unterschied puffern zu können. In den meisten Fällen ist die Stärke eines Klebers aber direkt mit seiner Härte verbunden.

Entsprechend der ersten Ausführungsform der vorliegenden Erfindung werden die Farbfiltersegmente 5, 5', 5" aus Glas auf eine Scheibe 7 aus Glas geklebt. Die Scheibe 7 aus Glas hat denselben CTE wie die Filtersegmente 5, 5', 5" aus Glas. Aus diesem Grund kann ein harter und starker Klebstoff verwendet werden, um die Farbfiltersegmente 5, 5', 5" an der Scheibe 7 zu fixieren. Die Scheibe 7 kann eine ringförmige Scheibe - oder allgemeiner - eine runde Scheibe sein. Der Durchmesser der Scheibe 7 ist klein im Vergleich zu dem Durchmesser des durch die Farbfiltersegmente gebildeten Farbfilterringes. Daher bilden die Farbfiltersegmente einen äußeren transparenten für Licht durchlässigen Ring. Im Gegensatz zum Stand der Technik, wie in EP 0 615 146 A2 beschrieben, muss das Licht nicht durch zwei Glasscheiben und eventuell eine Klebeschicht propagieren. Es kommt hinzu, dass die Klebezone im Vergleich zur US 5,868,482 kleiner gewählt werden kann, weil ein härterer und damit stärkerer Klebstoff verwendet werden kann.

Dieser assemblierte Ring kann nun am drehbar gelagerten Aluminiumträger 3 befestigt werden. In Bezug auf die Zentrifugalkräfte sichert und stabilisiert die Scheibe 7 die Filtersegmente 5, 5', 5". Die Verbindung zwischen drehbar gelagertem Aluminiumträger 3 und der Scheibe 7 muss daher lediglich den Rotationskräften standhalten, die dazu benötigt werden, den assemblierten Ring in Rotation zu versetzen und in Rotation zu halten. Diese Verbindung ist bei weitem weniger anspruchsvoll als die Verbindung zwischen den Farbfiltersegmenten 5, 5', 5" und der Scheibe 7. Aus diesem Grund kann sogar bei Anwendungen mit hoher Betriebs-Drehzahl ein schwächerer Klebstoff verwendet werden, um die Scheibe 7 an dem drehbar gelagerten Aluminiumträger 3 zu befestigen. Es besteht daher die Möglichkeit, einen weichen Klebstoff zu verwenden, der die Auswirkungen des CTE-Unterschieds zwischen dem Aluminium des Trägers 3 und des Glases der Scheibe 7 puffern kann.

Entsprechend einer zweiten Ausführungsform der vorliegenden Erfindung wird die Scheibe 7 aus Glas durch eine Metallscheibe ersetzt, wobei ein Metall gewählt wird, dessen CTE deutlich unterhalb dem CTE des Aluminiums liegt, jedoch nicht kleiner als der CTE der Filtersegmente ist. Beispiele hierfür sind Eisen (CTE=12.2), Stahl (CTE=13.0), Nickel (CTE=13.0), Platin (CTE=9.0), Titan (CTE=10.8) oder Legierungen der genannten Metalle. In Bezug auf Härte und Halt am drehbar gelagerten Aluminiumträger wäre Titan eine gute Wahl. Aus Kostengründen wird allerdings vorzugsweise rostfreier Stahl (SST - 410) verwendet. Dieser hat bei 20°C einen CTE von 9.9. Die Farbfiltersegmente aus Glas werden an der Stahlscheibe mittels eines starken Klebstoffs fixiert. Dies ist möglich, weil der CTE des rostfreien Stahls dem CTE des Glases ähnelt. Im Gegensatz zu Glas sind Metalle nicht spröde, sondern weisen eine relativ hohe Plastizität auf. Wird daher die Stahlscheibe mit genügender Dicke gewählt, so kann die Scheibe starr am drehbar gelagerten Träger angeordnet werden. Die Plastizität des Metalls führt zu insgesamt niedrigen Spannungen im Falle einer Temperaturänderung. Die Metallscheibe selbst puffert den Effekt der unterschiedlichen CTEs vom drehbar gelagerten Aluminiumträger und Farbfiltersegmenten aus Glas.

Bisher wurde lediglich davon gesprochen, dass die Scheibe, die zwischen den Segmenten und dem Träger vermittelt, aus Glas oder Metall sein kann. Andere Materialien können auch genommen werden, sobald diese den geeigneten CTE haben, um die Segmente daran sicher fixieren zu können. Denkbar sind daher unter anderem auch unterschiedliche keramische Materialien oder Plastikmaterialien. Weisen diese Materialien auch noch eine ausreichende Plastizität auf, so kann die Verbindung zum Träger ebenfalls hart und daher sehr stabil gestaltet werden.

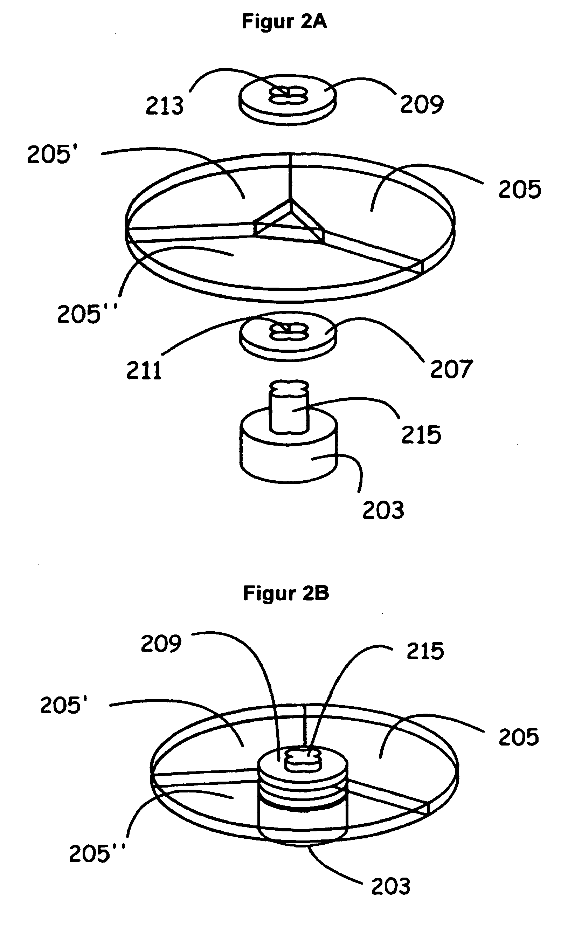

Figur 2A zeigt eine dritte Ausführungsform der vorliegenden Erfindung in Explosionsansicht. Gezeigt ist in Figur 2A eine Version des Farbrotors mit einem drehbar gelagerten Aluminiumträger 203, zwei Scheiben 207, 209 und Glas-Filtersegmenten 205, 205', 205". In den Beispielen sind jeweils lediglich drei Segmente diskutiert. Es ist aber klar, dass die ganzen Konzepte auf Farbräder mit mehr als zwei Segmenten anwendbar sind. Die Glas-Filtersegmente 205, 205', 205" sind zwischen der ersten Scheibe 207 und der zweiten Scheibe 209 eingelegt. Das Material der Scheiben ist Glas oder Metal. Es besitzt einen CTE, der deutlich unterhalb dem CTE des Aluminiumträgers 203 liegt. Vorzugsweise wird als Scheibenmaterial rostfreier Stahl (SST - 410) verwendet.

Wie in Figur 2A gezeigt, können die Scheiben 207, 209 und der Aluminiumträger 203 Elemente eines Schlüssel-Schlüsselloch-Systems umfassen. Dementsprechend umfassen die Scheiben 207, 209 zentrale Löcher 211, 213 die nicht rotationssymmetrisch sind. Der Aluminiumträger 203 umfasst ein formangepasstes Schlüsselelement.

Figur 2B zeigt die Ausführungsform gemäß Figur 2A in assemblierter Form. Die Glas-Filtersegmente 205, 205', 205" können mit der ersten Scheibe 207 oder mit der zweiten Scheibe 209 oder mit beiden Scheiben verklebt werden. Es wird darauf hingewiesen, dass das Schlüsselelement 215 und die Scheibe 209 zusätzliche Strukturen umfassen können, die es erlauben, die Scheibe 209 am Schlüsselelement 215 mittels eines Schnappmechanismus zu befestigen. Diese Art von Befestigung kommt ohne Klebstoff aus, obwohl natürlich zusätzlich Klebstoff verwendet werden könnte. Alternativ - oder zusätzlich zum Schnappmechanismus - kann auch eine Möglichkeit zum verschweissen vorgesehen sein, um die Scheibe 209 am Aluminiumträger 203 zu fixieren.

Zur Dicke der Scheiben 7, 207, 307 lässt sich sagen, dass diese ausreichend dick sein müssen, um sie noch gut handhaben zu können. Die untere Grenze liegt hierbei realistischerweise bei $20 \mu m$. Die Dicke der Scheibe ist nicht funktional begrenzt. Man wird aber eine Dicke unterhalb 5 mm bevorzugen, um die Dimensionen des Farbrades nicht über Gebühr zu vergrössern.

Um zu testen, welche Dicke der Scheibe bei einer bestimmten Materialkombination ausreichend ist, kann man Testrotoren, die einen Träger, Glasegmente und eine Scheibe umfassen, Temperaturzyklen von -20°C bis +80°C unterwerfen. Werden diese anschliessend mit der für die gedachte Anwendung notwendigen Drehzahl rotiert, kann festgestellt werden, ob sie der Belastung standhalten. Solche Tests können mit Rotoren mit unterschiedlichen Scheibendicken durchgeführt werden.

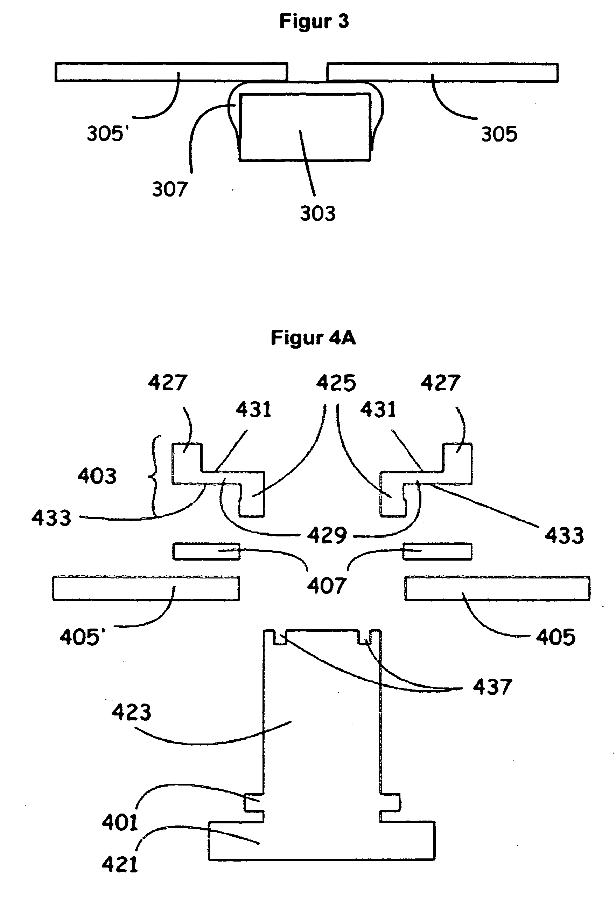

Die Figur 3 zeigt den Querschnitt einer vierten Ausführungsform der vorliegenden Erfindung. Gezeigt sind zwei Glasegmente 305, 305', die an einem drehbar gelagerten Aluminiumträger 303 befestigt sind. Der Aluminiumträger 303 ist mit einer Metallschicht 307 bedichtet. Die Metallschicht hat einen signifikant niedrigeren CTE als Aluminium. In diesem Fall ist das bevorzugte Schichtmaterial für die Metallschicht Titan. Allerdings können auch andere Metalle mit niedrigerem CTE als Aluminium verwendet werden. Die Glassegmente 305, 305' werden an die Metallschicht mittels eines harten und daher potentiell starken Klebers geklebt. Aufgrund ihrer Plastizität kann die Metallschicht 307 als Puffer wirken, um Spannungen zwischen dem Aluminiumträger 303 und den Glassegmenten 305, 305' zu reduzieren. Um effektiv eine brauchbare Reduktion der Spannungen zu erhalten, muss die Metallschicht genügend dick gewählt werden. Es hat sich gezeigt, dass eine Schichtdicke von mindestens 250nm gewählt werden sollte, um eine spürbare Entspannung zu erreichen. Schichtdicken von mehr als $20 \mu m$ werden für einen wirtschaftlichen Herstellungsprozess zu teuer.

Die Figuren 4A bis 4C zeigen eine weitere Ausführungsform der vorliegenden Erfindung. Bisher wurde in den Figuren lediglich der Farbrotor gezeigt. Der Motor, der diesen Rotor antreibt, wurde aus Gründen der besseren Darstellung weggelassen. Demgegenüber zeigt Figur 4A die Explosionsansicht eines Farbrades mit einem Motor 421, der einen zylindrischen, drehbar gelagerten ersten Träger 423 umfasst. Auf diesen ersten Träger 423 ist ein ringförmiger zweiter Träger 403 geschoben. Der erste Träger 423 umfasst Strukturen 401, die dem ringförmigen zweiten Träger 403 einen Anschlag bilden und ihn damit in Position halten.

Der ringförmige zweite Träger 403 wird von zwei Hohlzylindern 425, 427 mit unterschiedlichen Durchmessern gebildet, die durch einen Verbindungsring 429 verbunden sind. Die innere Oberfläche des kleineren Hohlzylinders schmiegt sich an die Mantelfläche des ersten Trägers 423 an. Der Verbindungsring 429 umfasst eine obere Oberfläche 431 und eine untere Oberfläche 433. An der unteren Oberfläche 407 ist eine Scheibe 407 aus rostfreiem Stahl (SST - 410) angebracht. Man beachte dass die Zahl "- 410" die Materialart beispielhaft festlegt und nicht als Bezugszeichen zu den Figuren zu werten ist. An der Scheibe 407 sind Glas-Filtersegmente 405, 405' angeordnet. Rostfreier Stahl (SST - 410) hat einen CTE, der im Vergleich zu Aluminium näher an dem CTE von Glas liegt. Daher werden weniger Spannungen auf die Glas-Filtersegmente 405, 405' ausgeübt, wenn das Farbrad Temperaturschwankungen ausgesetzt ist.

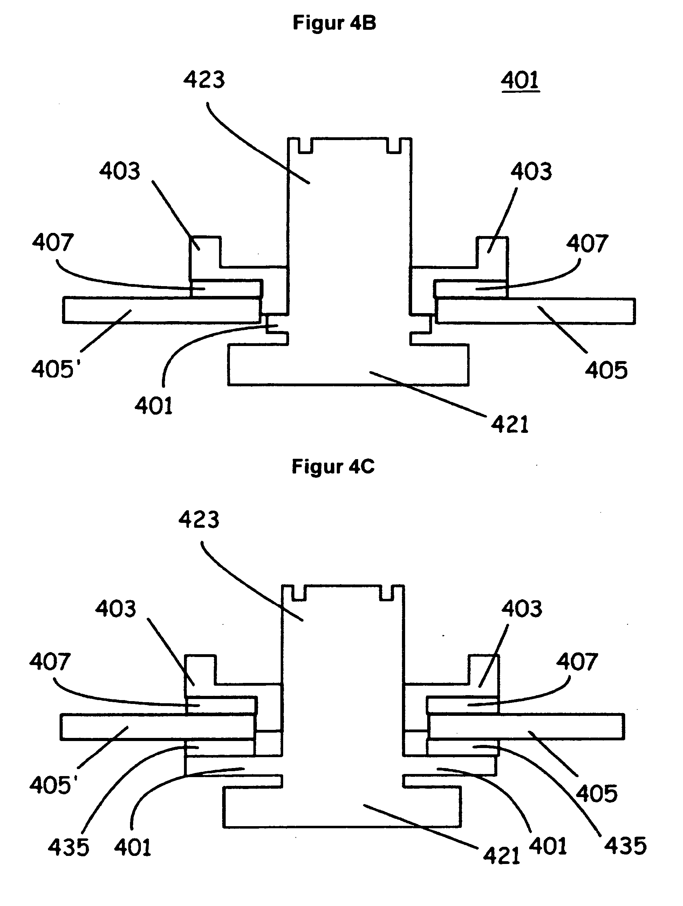

Ein harter und daher starker Klebstoff kann verwendet werden, um die Glas-Filtersegmente 405, 405' an der Scheibe 407 zu befestigen. Demgegenüber kann ein weicher Klebstoff verwendet werden, um die Scheibe am zweiten Träger 403 zu befestigen. Das assemblierte Farbrad ist in Figur 4B im Querschnitt dargestellt.

Man bemerke, dass es, wie in Figur 4C gezeigt, keines Klebstoffs bedarf, um die Scheibe 407 am zweiten Träger 403 zu befestigen. Dies jedenfalls dann nicht, wenn eine zweite Scheibe 435 aus rostfreiem Stahl (SST - 410) an den Glas-Filtersegmenten 405, 405' (an der der ersten Scheibe 407 gegenüberliegenden Seite) angebracht wird und die geometrische Form der Strukturen 401 derart gewählt wird, dass auf ihnen die zweite Scheibe 435 aufliegt. Sorgt man nun noch dafür, dass der zweite Träger 403 und die Strukturen 401 den durch die Kombination aus Scheiben 407, 435 und Glas-Segmenten 405, 405' entstandenen Ring fest einklemmen, so liegt ein stabiles Bauteil vor.

Vorzugsweise umfasst das Farbrad auch Mittel, um den Rotor auszuwuchten. In der in den Figuren 4A-C beschriebenen Ausführungsform ist dies der Fall. Erstens bildet der grössere Hohlzylinder 427 des zweiten Träger 403 zusammen mit dem Verbindungsring 429 und einem Teil der Mantelfläche des ersten Trägers 423 einen ringförmigen Container, in den sich Material zum Auswuchten füllen lässt. Zweitens zeigen die Figuren zusätzlich einen ringförmigen Graben 437 in der oberen Grundfläche des ersten Trägers 423. Dieser Graben kann auch mit Material zum Auswuchten gefüllt werden. Auf diese Weise wird sogar das Auswuchten des Farbrotors auf zwei Ebenen ermöglicht.

Bezugszeichenliste

| | |
|---|---|
| 1 | Farbrotor |
| 3 | Träger |
| 5 | Farbfiltersegment |
| 5' | Farbfiltersegment |
| 5" | Farbfiltersegment |
| 7 | Scheibe |
| 203 | Träger |
| 205 | Filtersegment |
| 205' | Filtersegment |
| 205" | Filtersegment |
| 207 | Scheibe |
| 209 | Scheibe |
| 211 | Loch |
| 213 | Loch |
| 215 | Schlüsselelement |
| 303 | Träger |
| 305 | Glasegment |
| 305' | Glasegment |
| 307 | Metallschicht |
| 401 | Struktur |
| 403 | zweiter Träger |
| 405 | Filtersegment |
| 405' | Filtersegment |
| 407 | erste Scheibe |
| 423 | erster Träger |
| 425 | Hohlzylinder |
| 427 | Hohlzylinder |
| 429 | Verbindungsring |
| 431 | obere Oberfläche |
| 433 | untere Oberfläche |
| 435 | zweite Scheibe |

**Patentansprüche**

**1.** Farbrad mit einem Motor und einem Rotor (1),

wobei der Rotor (1) einen Träger (3) aus einem Material mit einem ersten thermischen Expansionskoeffizienten CTE 1 umfasst und der Rotor Segmente (5, 5', 5") mit einem zweiten, vom ersten unterschiedlichen Expansionskoeffizienten CTE 2 umfasst, und die Segmente vermittels einer die Segmente (5, 5', 5") fest verbindenden Scheibe (7) so am Träger (3) befestigt sind, dass Teile der Segmente (5, 5', 5") über die Scheibe (7) und den Träger (3) hinausragen und die hinausragenden Teile der Segmente (5, 5', 5") zusammen einen ringförmigen Bereich bilden, wobei der thermischen Expansionskoeffizient CTE 3 des Scheibenmaterials entweder im wesentlichen gleich dem CTE2 ist oder gilt:

$$CTE\ 3$$

**dadurch gekennzeichnet, dass** zur Befestigung der Segmente (5, 5', 5") an der Scheibe (7) ein erster Klebstoff verwendet wird und zur Befestigung der Scheibe (7) am Träger (3) ein zweiter Klebstoff verwendet wird, wobei die durch den ersten Klebstoff entstandene Verbindung deutlich stärker ist als die durch den zweiten Klebstoff entstandene Verbindung. und wobei der erste Klebstoff hart und der zweite Klebstoff weich ist.

2. Farbrad nach Anspruch 1, **dadurch gekennzeichnet, dass** das Scheibenmaterial im Wesentlichen gleich dem Segmentmaterial ist.

3. Farbrad nach Anspruch 1, **dadurch gekennzeichnet, dass** das Scheibenmaterial ein Metall, vorzugsweise Stahl, und besonders bevorzugt rostfreier Stahl ist.

4. Farbrad nach Anspruch einem der Ansprüche 1 bis 3, **dadurch gekennzeichnet, dass** der Träger im Wesentlichen ein Aluminiumträger ist und das Segmentmaterial im wesentlichen Glas und/oder Plastik ist.


**Claims**

1. A colour wheel comprising a motor and a rotor (1), wherein the rotor (1) comprises a carrier (3) composed of a material having a first coefficient of thermal expansion CTE1 and the rotor comprises segments (5,5',5") having a second coefficient of thermal expansion CTE2, which is different from the first, and the segments are fixed to the carrier (3) by means of a disc (7) that fixedly connects the segments (5,5',5"), in such a way that parts of the segments (5,5',5") project beyond the disc (7) and the carrier (3) and the projecting parts of the segments (5,5',5") together form a ring-shaped region, wherein the coefficient of thermal expansion CTE 3 of the disc material is substantially equal to CTE 2 or the following applies:

$$\left| CTE\ 3 - \frac{CTE\ 1 + CTE\ 2}{2} \right| < \left| \frac{CTE\ 1 - CTE\ 2}{2} \right|$$

**characterized in that** a first adhesive is used for fixing the segments (5,5',5") to the disc (7) and a second adhesive is used for fixing the disc (7) to the carrier (3), wherein the connection produced by the first adhesive is significantly stronger than the connection produced by the second adhesive and wherein the first adhesive is hard and the second adhesive is soft.

2. A colour wheel according to claim 1 **characterized in that** the disc material is substantially equal to the segment material.

3. A colour wheel according to claim 1, **characterized in that** the disc material is made of metal, preferably steel, and particularly preferred stainless steel.

4. A colour wheel according to one of the claims 1 to 3, **characterized in that** the carrier is substantially made of aluminium and the segment material is substantially made of glass and/or plastic.

**Revendications**

1. Roue de couleurs ayant un moteur et un rotor (1), le rotor comprenant un support (3) fait d'un matériel ayant un premier coefficient de dilatation thermique CTE 1 et le rotor comprenant des segments (5, 5', 5") ayant un second coefficient de dilatation thermique CTE 2 qui est différent du premier, et les segments étant fixés au support (3) à l'aide d'un disque (7) reliant solidement les segments (5, 5', 5") de sorte que des parties des segments (5, 5', 5") s'étendent au-dessus du disque (7) et du support (3) et que les parties des segments s'étendant au-dessus de ceux-ci forment ensemble une zone annulaire, le coefficient de dilatation thermique CTE 3 du matériel du disque étant essentiellement égal au CTE 2 ou ce qui suit s'applique:

$$\left| CTE\ 3 - \frac{CTE\ 1 + CTE\ 2}{2} \right| < \left| \frac{CTE\ 1 - CTE\ 2}{2} \right|$$

   **caractérisé par le fait qu'**un premier adhésif est utilisé pour fixer les segments (5, 5', 5") au disque (7) et un second adhésif est utilisé pour fixer le disque (7) au support (3), la connexion produite par le premier adhésif étant nettement plus forte que la connexion produite par le second adhésif et le premier adhésif étant dur et le second adhésif étant souple.

2. Roue de couleurs selon la revendication 1, **caractérisé par le fait que** le matériel du disque est essentiellement égal au matériel des segments.

3. Roue de couleurs selon la revendication 1, **caractérisé par le fait que** le matériel du disque est composé de métal, de préférence d'acier, et particulièrement préféré d'acier inoxydable.

4. Roue de couleurs selon une des revendications 1 à 3, **caractérisé par le fait que** le support consiste essentiellement en aluminium et le matériel des segments consiste essentiellement en verre et/ou plastique.

## Figur 1A

5'

5

5''

7

1

3

## Figur 1B

5'

5

5''

7

1

3

## Figur 2A

## Figur 2B

**Figur 3**

**Figur 4A**

## Figur 4B

## Figur 4C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0615146 A2
- US 20060126199 A
- US 5868482 A
- US 6705733 B